Europäisches Patentamt

European Patent Office

Office européen des brevets

(11) Publication number: **0 101 982**
**B1**

(12) EUROPEAN PATENT SPECIFICATION

(45) Date of publication of patent specification: 30.11.88

(51) Int. Cl.⁴: **G 01 N 30/00**

(21) Application number: 83107709.4

(22) Date of filing: 04.08.83

(54) Chromatography column.

(30) Priority: 27.08.82 US 412695

(43) Date of publication of application:
07.03.84 Bulletin 84/10

(45) Publication of the grant of the patent:
30.11.88 Bulletin 88/48

(84) Designated Contracting States:
DE GB IT

(56) References cited:
DE-A-1 804 831
GB-A-2 048 106
GB-A-2 090 768
US-A-3 295 296
US-A-4 293 415
PATENTS ABSTRACTS OF JAPAN, vol. 6, no.
245(P-159)(1123), 3rd December 1982
Jennings, W.G. "Comparisons of fused silica
and other glass columns in gas
chromatography" in chromatographic
methods, 1981, Dr.A. Hüthig Verlag GmbH,
Heidelberg, ISBN 3-7785-0729-X.

(73) Proprietor: THE PERKIN-ELMER CORPORATION
761 Main Avenue
Norwalk Connecticut 06856-0181 (US)

(72) Inventor: Ogan, Kenneth Lee
Oak Ridge Road RD1
Bethel Connecticut 06801 (US)
Inventor: Reese, Charles Edwin
c/o The Perkin-Elmer Corporation
Main Avenue Norwalk Connecticut 06856 (US)
Inventor: Scott, Raymond Peter William
625 Ridgebury Road
Ridgefield Connecticut 06877 (US)

(74) Representative: Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)

Courier Press, Leamington Spa, England.

## Description

The present invention relates to a chromatography column comprising a glass capillary tube which has a melting point of less than about 1100°C, said tube having an external surface (52) and an internal surface (54) which has a deactivating coating (64). The invention also comprises a method of fabricating a chromatographic column, including the steps of supplying a rigid glass tube (50) having a melting point of less than about 1100°C, said tube being hollow and forming an external and an internal surface and applying a deactivating coating onto the internal surface of the glass capillary tube.

As used herein the term "glass" is intended to include those glass materials which have a melting point of less than 1100°C. More specifically, the term "glass" as used herein includes such compositions as borosilicate glass, soda-lime glass and clearly excludes silica glass, i.e., fused quartz, which has a melting point on the order of about 1600°C.

As well known on the chromatographic arts in particular the art engendering gas chromatography, the separation of the constituents of the sample material is dependent upon, inter alia, the length of the separation column. While this may appear to be an overly simplistic statement it is nevertheless a major consideration in all gas chromatographic column analysis. Because of the high mobility of gas, compared to liquid, and because many gas chromatographic columns are of the "open-tube" type, i.e, without a packed bed, gas chromatography columns are often quite long, e.g. 50 meters or more. Consequently, such columns, generally capillaries, must be coiled to allow insertion into chromatographic ovens. To date, it has been necessary to heat the glass capillary after its information in order to form a useful column. The process for forming such a coil is described in an article entitled Construction of Long Lengths of Coiled Glass Capillary; Analytical Chemistry, 1960, p. 302.

One major disadvantage of such a coiled capillary is its fragility, i.e., it is easily broken due to its rigidity. In fact, it has been believed by persons in the field, that the wall thickness of even the rigid heat-formed glass coiled columns has to be relatively large to avoid fracturing the glass. A chromatographic column as stated above, the tube of which, having a relatively large wall thickness is, for example, disclosed in DE—A—1 804 831.

The rigidity of the glass columns, even though slightly flexible in the axial direction of the coil, required that the ends be straightened by heating in order to be inserted into a gas chromatographic instrument oven. This heating, in addition to being tedious and frustrating, was also a frequent source of column deterioration, at least in so far as it deteriorated the integrity and usefulness of the stationary phase near the ends of the column. Such deterioration was quite impossible to measure and thus the analytical results were inherently questionable.

Exemplary of such a belief is found in Patent US—A—4,293,415, or its equivalent GB—A—2 048 106, which specifically recites the above stated disadvantages and goes on to describe a chromatographic column made from quartz as i.e. silica.

Another primary disadvantage, which has deterred those in the art from continuing investigating the broad usefulness of glass columns has been the generally held belief that glass columns excessively distort even slightly acidic and basic sample materials. This effect is believed to be caused by the chemical activity of the surface of the glass. Such chemical activity is believed to result in sample components being irreversibly or non-linearly absorbed by the column and thus not eluting from the column at all or to elute with so seriously distorted peak shapes as to be useless for analytical purposes.

It is an object of the present invention to provide a highly flexible glass chromatographic capillary column of use in modern gas chromatographic analysis and to provide a method for preparing such a column.

This task is solved with the features of independent claims 1 and 8.

Preferred embodiments are disclosed in the dependent claims, the text of which are included in the specification by reference.

The invention will now be described with respect to the attached drawing. The attached drawing includes:

Figure 1, which is a schematic representation of a machine for producing highly flexible glass capillary column;

Figure 2, which is a pictorial view of a means for coating a highly flexible glass capillary column during the production thereof;

Figure 3, which is a cross-sectional view of a portion of a highly flexible glass capillary column;

Figures 4A and 4B, which are chromatograms demonstrating the efficacy of a highly flexible glass capillary column; and

Figure 5 which is a tabulated comparison of the results shown in Figures 4A and 4B.

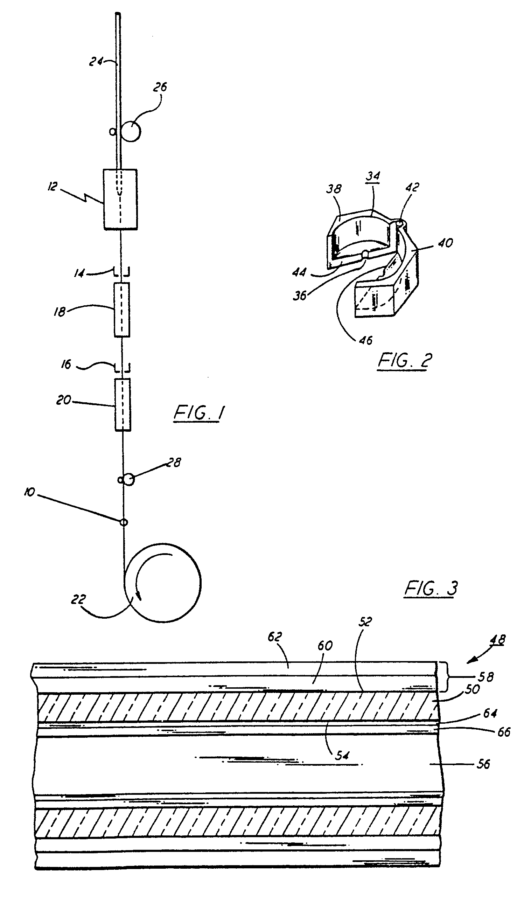

A highly flexible glass capillary column, generally indicated at 10 in Figure 1, embodying the principles of the present invention, can be produced by means of a modified conventional rigid glass column drawing machine 12. The aforementioned modifications include, inter alia, first and second column coating means, 14 and 16 respectively, first and second curing means, 18 and 20 respectively, and a take-up drum 22 which drum is preferably driven by a dedicated motor, not shown in the drawing.

The above-described apparatus is operated to faithfully produce the highly flexible glass capillary columns 10 and ensure that flexibility by providing a coating thereon which protects the glass from deterioration generally believed to be the result of interaction between the glass and moisture or other materials.

In one preferred mode, a rigid glass tube 24 having an outside diameter of about 4 millimeters and an inside diameter of about 2.5 millimeters is used as the feed stock. The rigid glass tube 24 is initially cleaned, for example, with a 10% hydrochloric acid solution which is rinsed with water and subsequently dried. Preferably, thereafter, the tube 24 is handled with a gloved hand.

The cleaned tube 24 is fed into the drawing machine 12 via a set of feed pulleys 26. The temperature of the drawing machine 12 is set at about 670°C for soda lime glass. The resultant capillary column 10 is drawn from the machine 12 via a set of draw pulleys 28. The driving motors, not shown, for the feed pulleys 26 and the draw pulley 28 must be carefully adjusted to ensure a smooth, continuous linear movement of the drawn capillary column 10. The majority of highly flexible glass capillary columns 10 drawn to date have been with a drawing ratio, i.e., the ratio of the drawn length to the feed length, of about 110 to 1 and have resulted in capillary columns 10 having outside diameters of about 0.3 millimeters and inside diameters of about 0.2 millimeters.

In order for the column 10 to retain its strength and, most importantly, its flexibility, it must be provided with an external coating as rapidly as possible after it is formed. Such coating serves to protect the external surface from the deleterious effects of moisture and other materials which can make the glass friable. Further, the internal surface must also be treated with an appropriate coating to prevent the drawn column from becoming friable. However, this coating can be applied subsequent to the entire length of the capillary being drawn. The permissible hiatus in applying such treatment to the internal surface is granted from the reduction diffusion rate of moisture bearing gas, e.g., the atmosphere or ambient therethrough because of the capillary dimension of the column 10.

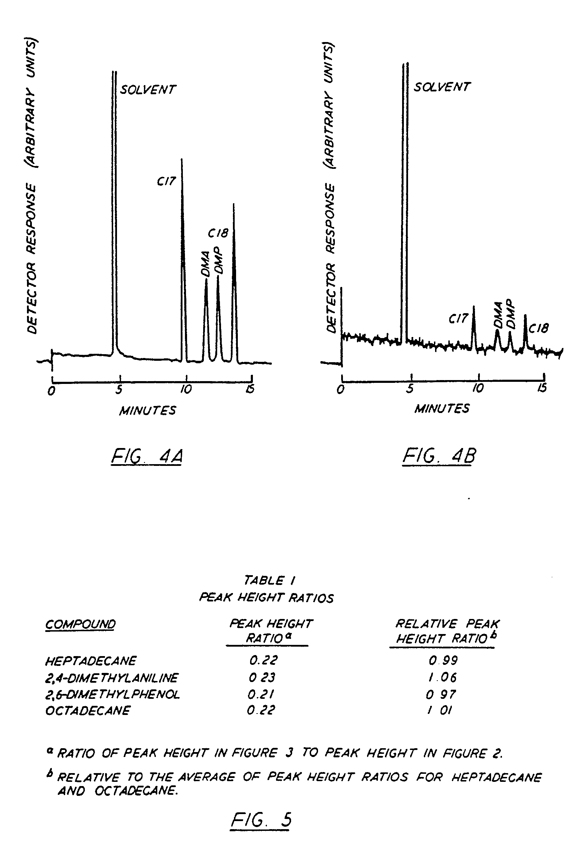

The external coating which, in the preferred embodiment, comprises a first and a second column coating 60 and 62 respectively, shown in Figure 3, is applied by the aforementioned first and second coating means, 14 and 16 respectively. As clearly shown in Figure 2, the coating means, 14 and 16 includes a cup 34 having a bore 36 through which the column 10 is drawn. Preferably the cup 34 is made from a pair of semicircular members 38 and 40 which are united by means of, for example, a hinge 42. The cup 34 is rigidly affixed to a stationary base member, not shown, so that the bore 36 is axially aligned with the drawn column 10. In operation, the cup 34 is provided with a column coating material preferably Pyralin PI-2550, a polyamide. The Pyralin PI-2550 can be applied either in its pure form or it can be diluted, for example, with N-methyl-2-pyrrolidone. Although other materials, including metals, can be used for the first and second coatings, 60 and 62 respectively, the Pyralin PI-2550 is preferred. In order to prevent leakage of the coating material through the bore 36 the mating surfaces, 44 and 46, respectively, of the semicircular members, 38 and 40 respectively, are provided with a layer of resilient material, for example, a strip of Teflon.

In order to effectively bond the Pyralin PI-2550 to the column 10, the wet coated column 10 is passed through the first curing means 18 substantially immediately upon exiting the first column coating means 14 and the second curing means 20 substantially immediately upon exiting the second column coating means 16. In this instance, the curing means 18 and 20 are effectively constant temperature ovens. The first curing means 18 is set to a temperature of about 300°C±50°C, whereas the second curing means 20 is set to a temperature of about 350°C±50°C. The higher temperature of the second curing means 20, in addition to removing the solvent of the second column coating 62, further cures the first column coating 60.

As stated above, the internal surface of the highly flexible glass capillary column 10 must also be treated to avoid friability. To this end, the internal surface is flushed with n-butanol and, in order to be useful as a chromatographic column, is subsequently passivated or deactivated. This deactivation may be accomplished by techniques well known in the glass chromatographic column coating art. Preferably, the internal surface is first subjected to an n-butanol flush and thereafter a static leach with gaseous hydrochloric acid prior to applying a film of Carbowax 20M, a polyethylene glycol. Thereafter, in the columns formed to date, the column 10 was subjected to a dichloromethane rinse and a stationary phase layer of Carbowax 20M was applied by conventional techniques.

Referring particularly to Figure 3, a resultant highly flexible glass chromatographic capillary column 48 is shown in cross-section. As shown, the column 48 includes a highly flexible glass capillary tube 50 having an external surface 52 and an internal surface 54 and having a continuous bore 56 therethrough. The external surface 52 has a moisture impervious coating 58 which includes a first and a second layer, 60 and 62 respectively, of a polymide. The internal surface 54 has an adhesion layer 64 adjacent thereto which layer 64 has a chromatographic stationary phase layer 66 thereover.

The efficacy of the above-described highly flexible glass chromatographic capillary column 48 was investigated both for its acid/basic separation capability and the possible irreversible adsorption of either acidic or basic components. Although only soda-lime glass columns have been drawn to date, it is anticipated that similar results are achievable with other glass columns, e.g. borosilicate glass or the like. The results are shown in Figures 4 and 5. Figures 4A and 4B are chromatograms representing the capabilities of the column and Figure 5 is a companion table interrelating the chromatograms.

A test sample was prepared which includes a base/acid pair of compounds and a substantially neutral pair of compounds in a toluene solution. The base/acid pair selected was 2,4-dimethylaniline (DMA) and 2,6-dimethylphenol (DMP) whereas the reference compounds were heptadecane (C17) and octadecane (C18). All of these compounds are chromatograph standards for evaluating the efficacy of gas chromatographic columns. The sample solution was 0.75% w/vol. and the column 48 was about 17.5 meters long. A Perkin-Elmer Sigma 115 Gas Chromatograph was used for the testing. The response time of the detector was modified to enable the output signal to more rapidly respond to the chromatographic peaks characteristic of any small capillary column. The test conditions were: helium carrier gas, $\bar{u}$ (linear velocity) of 6 cm/sec; 600:1 split ratio, and temperature of 120°C. The only operating condition change between the test represented in Figure 4A and that shown in Figure 4B was a 1:10 dilution of the test sample prior to the test shown in Figure 4B and a four-fold decrease in detector attenuation.

The primary column characteristic, amply demonstrated by the chromatogram of Figure 4A, of interest is the polarity of the internal surface of capillary column. As shown there is very little "tailing" of the component peaks. Tailing is a term of art used to indicate the lopsidedness of a chromatographic peak. Tailing usually results from a sample component being retained on the stationary phase material in a non-uniform manner. Thus, as shown in Figure 4A, the stationary phase of the highly flexible glass chromatographic capillary column 48 is, for all intents and purposes, neutral. In order to determine the presence of any acidic or basic adsorption sites the solution was diluted so that the peaks were just above the noise level of the chromatogram. Again, as shown in Figure 4B, there is no serious tailing of the peaks.

A close comparison of the two chromatograms in conjunction with the data set forth in Table I in Figure 5, clearly demonstrates that there is no discernable loss of either the acidic or basic compound at its lowest concentration. That is, the column 48 does not irreversibly adsorb either acidic or basic compounds. In fact, since the stationary phase coating 66, in this instance, was quite thin, on the order of about 0.1 micrometers, any irreversible adsorption of either acidic or basic compound would have been demonstrable.

Thus excellent chromatographic results have been obtained from a relatively inexpensive highly flexible glass capillary column.

## Claims

1. A chromatographic column (10, 48) comprising a glass capillary tube (50), said glass having a melting point of less than about 1100°C, said tube having an external surface (52) and an internal surface (54) which has a deactivating coating (64), characterized in that the glass tube (50) has a wall thickness of about 0.05 mm, has a moisture protecting coating (58) overlying substantially all of said external surface, and has a further coating (66) for reducing friability overlying said deactivating coating (64).

2. A column as claimed in claim 1, characterized in that said tube (50) has an inside diameter of about 0.2 mm.

3. A column as claimed in claim 1 or 2, characterized in that said moisture protecting coating (58) is polyimide.

4. A column as claimed in any one of claims 1—3, characterized in that said moisture protective coating (58) includes a first polyimide layer (60) adjacent said external surface (52) of said tube (59) and a second polyimide layer (62) overlying said first layer (60).

5. A column as claimed in any one of claims 1—4, characterized in that said polyimide is Pyralin PI-2550.

6. A column as claimed in any one of claims 1—5, characterized in that said coating for reducing friability includes a chromatographic stationary phase (66).

7. A column as claimed in any one of the foregoing claims, characterized in that said glass capillary tube (50) is substantially comprised of soda-lime.

8. A method of fabricating a chromatographic column, including the steps of supplying a rigid glass tube (50) having a melting point of less than about 1100°C, said tube being hollow and forming an external and an internal surface and applying a deactivating coating onto the internal surface of the glass capillary tube, characterized in that the said glass capillary tube is fed into a drawing machine and that the tube is drawn until it has a wall thickness of the order of about 0.05 mm and that a further coating for reducing friability is applied onto the deactivating coating and a moisture protecting coating is applied on substantially all of said external surface.

9. A method according to claim 8, characterized in the step of cleaning said glass tube with a ten per cent hydrochloric acid solution and rinsing with water and drying prior to feeding said glass tube into the drawing machine.

10. A method according to claims 8 or 9, characterized in that said rigid glass tube is soda-lime glass and said method further comprises the step of setting the temperature in said drawing machine at about 670°C.

11. A method according to any one of claims 8 to 10, characterized in that said moisture protecting coating is a polyimide.

12. A method according to any one of claims 8 to 11, characterized in that said step of applying a moisture protecting coating comprises the steps of applying a first polyimide layer adjacent said external surface of said tube and applying a second polyimide layer overlying said first layer.

13. A method according to any one of claims 8 to 12, characterized in that said coating for reducing friability includes a chromatographic stationary phase.

14. A method according to any one of claims 8 to 13, characterized in that said coating on the internal surface of the tube includes a passivating layer adjacent said internal surface and a chromatographic stationary layer overlying said passivating layer.

15. A method according to any one of claims 8 to 14, characterized in that said step of applying a moisture protecting coating comprises the steps of applying a first polyimide layer adjacent said external surface of said tube and curing said first layer at a temperature of between about 250°C to 350°C, and applying a second polyimide layer overlying said first layer and curing said second layer at a temperature of between about 300°C and 400°C.

**Patentansprüche**

1. Chromatografische Säule (10, 48) umfassend eine Kapillarröhre (50) aus Glas, wobei das genannte Glas einen Schmelzpunkt von weniger als ungefähr 1100°C und die genannte Röhre eine äußere Oberfläche (52) und eine innere Oberfläche (54) mit einem entaktivierenden Überzug (64) aufweist, dadurch gekennzeichnet, daß die Glasröhre (50) eine Wanddicke von ungefähr 0,05 mm, einen im wesentlichen die gesamte genannte äußere Oberfläche überdeckenden Feuchtigkeitsschutzüberzug (58) und einen weiteren die Bröckligkeit verringernden Überzug (66) aufweist, der den genannten entaktivierenden Überzug (64) überdeckt.

2. Säule nach Anspruch 1, dadurch gekennzeichnet, daß die genannte Röhre (50) einen Innendurchmesser von ungefähr 0,2 mm aufweist.

3. Säule nach Anspruch 1 oder 2, dadurch gekennzeichnet, daß der genannte Feuchtigkeitsschutzüberzug (58) Polyimid ist.

4. Säule nach irgendeinem der Ansprüche 1 bis 3, dadurch gekennzeichnet, daß der genannte Feuchtigkeitsschutzüberzug (58) eine der genannten äußeren Oberflächen (52) der genannten Röhre (59) benachbarte, erste Polyimidschicht (60) und eine zweite Polyimidischicht (62) aufweist, die die genannte erste Schicht (60) überdeckt.

5. Säule nach irgendeinem der Ansprüche 1 bis 4, dadurch gekennzeichnet, daß das genannte Polyimid Pyralin PI-2550 ist.

6. Säule nach irgendeinem der Ansprüche 1 bis 5, dadurch gekennzeichnet, daß der genannte Überzug zur Verringerung der Bröckligkeit eine chromatografische feste Phase (66) umfaßt.

7. Säule nach irgendeinem der vorhergehenden Ansprüche dadurch gekennzeichnet, daß die genannte Kapillarröhre (50) aus Glas im wesentlichen Natronkalk umfaßt.

8. Verfahren zur Herstellung einer chromatografischen Säule, welches die Schritte umfaßt, eine steife Glasröhre (50) mit einem Schmelzpunkt von weniger als 1100°C vorzuhalten, wobei die genannte Röhre hohl ist und eine äußere und eine innere Oberfläche bildet, und einen entaktivierenden Überzug auf der inneren Oberfläche der Kapillarröhre aus Glas aufzubringen, dadurch gekennzeichnet, daß die genannte Kapillarröhre aus Glas einer Ziehmaschine zugeführt wird und daß die Röhre gezogen wird, bis sie eine Wanddicke in der Größenordnung von ungefähr 0,05 mm aufweist, und daß ein weiterer Überzug zur Verringerung der Bröckligkeit auf den entaktivierenden Überzug und ein Feuchtigkeitsschutzüberzug im wesentlichen auf die gesamte genannte äußere Oberfläche aufgebracht wird.

9. Verfahren nach Anspruch 8, gekennzeichnet durch den Schritt des Reinigens der genannten Glasröhre mit einer 10%igen Salzsäurelösung und des Waschens mit Wasser und des Trocknens vor der Zuführung der genannten Glasröhre in die Ziehmaschine.

10. Verfahren nach Anspruch 8 oder 9, dadurch gekennzeichnet, daß die genannte steife Glasröhre aus Natronkalkglas ist und daß das genannte Verfahren ferner den Schritt umfaßt, die Temperatur in der genannten Ziehmaschine auf ungefähr 670°C einzustellen.

11. Verfahren nach irgendeinem der Ansprüche 8 bis 10, dadurch gekennzeichnet, daß der genannte Feuchtigkeitsschutzüberzug ein Polyimid ist.

12. Verfahren nach irgendeinem der Ansprüche 8 bis 11, dadurch gekennzeichnet, daß der Schritt des Aufbringens eines Feuchtigkeitsschutzüberzugs die Schritte umfaßt, eine erste Polyimidschicht der genannten äußeren Oberfläche der genannten Röhre benachbart aufzubringen und eine zweite, die genannte erste Schicht überdeckende Polyimidschicht aufzubringen.

13. Verfahren nach irgendeinem der Ansprüche 8 bis 12, dadurch gekennzeichnet, daß der genannte Überzug zur Verringerung der Bröckligkeit eine chromatografisch feste Phase umfaßt.

14. Verfahren nach irgendeinem der Ansprüche 8 bis 13, dadurch gekennzeichnet, daß der genannte Überzug auf der inneren Oberfläche der Röhre der genannten inneren Oberfläche benachbart eine Passivierungsschicht und eine die genannte Passivierungsschicht überdeckende, chromatografisch feste Schicht umfaßt.

15. Verfahren nach irgendeinem der Ansprüche 8 bis 14, dadurch gekennzeichnet, daß der genannte Schritt des Aufbringens einer Feuchtigkeitsschutzschicht die Schritte umfaßt, der genannten äußeren Oberfläche der genannten Röhre benachbart eine erste Polyimidschicht aufzubringen und die genannte erste Schicht bei einer Temperatur von ungefähr 250°C bis ungefähr 350°C zu härten, und eine die genannte erste Schicht überdeckende, zweite Polyimidschicht aufzubringen und die genannte zweite Schicht bei einer Temperatur von ungefähr 300°C bis ungefähr 400°C zu härten.

**Revendications**

1. Colonne chromatographique (10, 48) comprenant un tube capillaire en verre (50), ce verre ayant un point de fusion inférieur à environ 1 100°C, ce tube ayant une surface externe (52) et une surface interne (54) qui porte un revêtement désactivant (64), caractérisée en ce que ledit tube de verre (50) a une paroi d'épaisseur d'environ 0,05 mm, porte un revêtement de protection contre l'humidité (58) recouvrant pratiquement toute ladite surface externe, et porte au autre revêtement (66) pour réduire la friabilité, recouvrant ledit revêtement désactivant (64).

2. Colonne selon la revendication 1, caractérisée en ce que ledit tube (50) a un diamètre intérieur d'environ 0,2 mm.

3. Colonne selon la revendication 1 ou 2, caractérisée en ce que ledit revêtement de protection contre l'humidité (58) est un polyimide.

4. Colonne selon l'une quelconque des revendications 1—3, caractérisée en ce que ledit revêtement de protection contre l'humidité (58) comporte une première couche de polyimide (60) adjacente à ladite surface externe (52) dudit tube (59) et une seconde couche de polyimide (62) recouvrant ladite première couche (60).

5. Colonne selon l'une quelconque des revendications 1—4, caractérisée en ce que ledit polyimide est le Pyralin PI-2550.

6. Colonne selon l'une quelconque des revendications 1—5, caractérisée en ce que ledit revêtement de réduction de la friabilité comporte une phase stationnaire chromatographique (66).

7. Colonne selon l'une quelconque des revendications précédentes, caractérisé en ce que ledit tube capillaire en verre (50) est essentiellement constitué de chaux sodée.

8. Procédé de fabrication d'une colonne chromatographique, comportant les étapes consistant à fournir un tube de verre rigide (50) ayant un point de fusion inférieur à environ 1 100°C, ledit tube étant creux et réprésentant une surface externe et une surface interne et à appliquer un revêtement de désactivant sur la surface interne du tube capillaire en verre, caractérisé en ce que ce tube capillaire en verre est introduit dans une machine à étirer et en ce que le tube est étiré jusqu'à ce qu'il présente une paroi d'épaisseur de l'ordre d'environ 0,05 mm et en ce qu'un revêtement supplémentaire pour la réduction de la friabilité est appliqué sur le revêtement désactivant et un revêtement de protection contre l'humidité est appliqué sur presque toute ladite surface externe.

9. Procédé selon la revendication 8, caractérisé par une étape de nettoyage dudit tube de verre par une solution à 10% d'acide chlorhydrique et par son rinçage à l'eau et séchage avant d'introduire ledit tube de verre dans la machine à étirer.

10. Procédé selon les revendications 8 ou 9, caractérisé en ce que ledit tube de verre rigide est un verre de chaux sodée et en ce que ledit procédé comprend en outre l'étape consistant à fixer la température régnant dans ladite machine à étirer à environ 670°C.

11. Procédé selon l'une quelconque des revendications 8 à 10, caractérisé en ce que ledit revêtement de protection contre l'humidité est un polyimide.

12. Procédé selon l'une quelconque des revendications 8 à 11, caractérisé en ce que ladite étape d'application d'un revêtement de protection contre l'humidité comprend les étapes consistant à appliquer une première couche de polyimide au voisinage de ladite surface externe dudit tube et à appliquer une seconde couche de polyimide recouvrant ladite première couche.

13. Procédé selon l'une quelconque des revendications 8 à 12, caractérisé en ce que ledit revêtement de réduction de la friabilité comporte une phase stationnaire chromatographique.

14. Procédé selon l'une quelconque des revendications 8 à 13, caractérisé en ce que ledit revêtement de la surface interne du tube comporte une couche de passivation adjacente de ladite surface interne et une couche stationnaire chromatographique recouvrant ladite couche de passivation.

15. Procédé selon l'une quelconque des revendications 8 à 14, caractérisé en ce que ladite étape d'application d'un revêtement de protection contre l'humidité comprend les étapes consistant à appliquer une première couche de polyimide adjacente de ladite surface externe dudit tube et à durcir ladite première couche à une température comprise entre environ 250°C et 350°C, et appliquer une seconde couche de polyimide recouvrant ladite première couche et durcir ladite second couche à une température comprise entre 300°C et 400°C.

24

26

12

14

18

16

20

FIG. 1

28

10

22

34

38          42

40

44

36

46          FIG. 2

FIG. 3

62    60    52

48

58

50

64

66

54

56

FIG. 4A

FIG. 4B

TABLE I
PEAK HEIGHT RATIOS

| COMPOUND | PEAK HEIGHT RATIO[a] | RELATIVE PEAK HEIGHT RATIO[b] |
|---|---|---|
| HEPTADECANE | 0.22 | 0.99 |
| 2,4-DIMETHYLANILINE | 0.23 | 1.06 |
| 2,6-DIMETHYLPHENOL | 0.21 | 0.97 |
| OCTADECANE | 0.22 | 1.01 |

[a] RATIO OF PEAK HEIGHT IN FIGURE 3 TO PEAK HEIGHT IN FIGURE 2.

[b] RELATIVE TO THE AVERAGE OF PEAK HEIGHT RATIOS FOR HEPTADECANE AND OCTADECANE.

FIG. 5